# EUROPEAN PATENT APPLICATION

(11) **EP 4 383 434 A1**
(43) Date of publication of application: **12.06.2024**
(21) Application number: 23773444.7
(22) Date of filing: 29.01.2023
(51) Int. Cl.: H01M 50/383, H01M 50/375, H01M 50/342, H01M 10/613

(54) **BATTERY AND ELECTRIC APPARATUS**

(30) Priority: 25.03.2022 CN 202220678825 U
(71) Applicant: Contemporary Amperex Technology Co., Limited, Ningde, Fujian 352100 (CN)
(72) Inventor: ZHENG, Chenling, Ningde, Fujian 352100 (CN); LIU, Yue, Ningde, Fujian 352100 (CN); WANG, Zengzhong, Ningde, Fujian 352100 (CN)
(74) Representative: Gong, Jinping
(86) International application number: PCT/CN2023/073634
(87) International publication number: WO 2023/179192

(57) **Abstract**

A battery and an electric device are provided. The battery includes a first box portion, a second box portion, a battery cell, and an insulating liquid. The first box portion and the second box portion fit together to define an accommodating space. The battery cell is accommodated in the accommodating space. The battery cell is provided with an electrode terminal and a pressure relief mechanism. The electrode terminal is closer to the first box portion relative to the pressure relief mechanism. The pressure relief mechanism is configured to be actuated when an internal pressure or temperature of the battery cell reaches a threshold, to release the internal pressure or high-temperature gas. The insulating liquid is provided in the accommodating space and immerses the pressure relief mechanism. When the insulating liquid is provided in the accommodating space, the first box portion is located above the second box portion. The technical solutions of this application can improve the safety performance of the battery.

## Description

### CROSS-REFERENCE TO RELATED APPLICATIONS

This application claims priority to Chinese Patent Application No. 202220678825.9, filed on March 25, 2022 and entitled "BATTERY AND ELECTRIC DEVICE", which is incorporated herein by reference in its entirety.

### TECHNICAL FIELD

This application relates to the field of battery technologies, and more specifically, to a battery and an electric device.

### BACKGROUND

With the escalating environmental pollution, the new energy industry is attracting increasing attention. In the industry of new energy, battery technology is a crucial factor influencing its development.

During the use of batteries, a significant amount of heat is generated, impacting the safety performance of the batteries. Therefore, how to enhance the safety performance of batteries is an urgent issue that needs to be addressed.

### SUMMARY

Embodiments of this application provide a battery and an electric device, which can enhance the safety performance of the battery.

According to a first aspect, a battery is provided, including: a first box portion and a second box portion, where the first box portion and the second box portion fit together to define an accommodating space; a battery cell, where the battery cell is accommodated in the accommodating space, the battery cell is provided with an electrode terminal and a pressure relief mechanism, the electrode terminal is closer to the first box portion relative to the pressure relief mechanism, and the pressure relief mechanism is configured to be actuated when an internal pressure or temperature of the battery cell reaches a threshold, to release the internal pressure or high-temperature gas; and an insulating liquid, the insulating liquid being provided in the accommodating space and immersing the pressure relief mechanism. When the insulating liquid is provided in the accommodating space, the first box portion is located above the second box portion.

In embodiments of this application, the battery includes the first box portion and the second box portion, the battery cell and insulating liquid are accommodated in the accommodating space formed by the first box portion and the second box portion, the electrode terminal is closer to the first box portion relative to the pressure relief mechanism, the insulating liquid immerse the pressure relief mechanism, and when the insulating liquid is provided in the accommodating space, the first box portion is located above the second box portion. In this way, the pressure relief mechanism is actuated when an internal pressure or temperature of the battery cell reaches a threshold, to release the internal pressure or high-temperature gas. In this case, the insulating liquid can enter the battery cell through the pressure relief mechanism, cutting off the contact between combustible materials in the battery cell and air, preventing or mitigating internal ignition of the battery cell, and also reducing the temperature of the battery cell. In addition, the insulating liquid can exchange heat with the emissions discharged from the battery cell, reducing the temperature of the discharged emissions and preventing the thermal runaway from spreading to adj acent battery cells or the entire battery. Therefore, the technical solutions of the embodiments of this application can enhance the safety performance of the battery.

In one possible implementation, when the insulating liquid is provided in the accommodating space, height of the insulating liquid in the accommodating space in a direction of gravity is smaller than height of the second box portion in the direction of gravity. Thus, when the insulating liquid is provided in the accommodating space, height of the insulating liquid will not exceed height of the second box portion, preventing the insulating liquid from leaking at the joint between the first box portion and the second box portion.

In one possible implementation, the electrode terminal is provided on a first wall of the battery cell, the pressure relief mechanism is provided on a second wall of the battery cell, and the first wall and the second wall are provided spaced apart and opposite each other in a first direction. When the insulating liquid is provided in the accommodating space, the first direction is parallel to the direction of gravity. In this way, on one hand, emissions discharged from inside of the battery cell experiencing a thermal runaway, for example, the discharged metal debris, will not electrically connect with the current collecting component connecting the electrode terminals, thus avoiding short circuits of some battery cells and improving the safety performance of the battery; and on the other hand, during the use of the battery, the second wall is usually positioned away from the user, and disposing the pressure relief mechanism on the second wall can reduce harm to the user.

In one possible implementation, the electrode terminal is provided on a first wall of the battery cell, the pressure relief mechanism is provided on a third wall of the battery cell, the first wall is connected to the third wall, the third wall is parallel to a first direction, and the first wall is perpendicular to the first direction. When the insulating liquid is provided in the accommodating space, the first direction is parallel to the direction of gravity. The above arrangement is beneficial to the production of battery cells.

In one possible implementation, the pressure relief mechanism and the electrode terminal are provided on a third wall of the battery cell, and the third wall is parallel to a first direction. When the insulating liquid is provided in the accommodating space, the first direction is parallel to the direction of gravity. In this way, there is no need to reserve space for the electrode terminal between the first wall and the first box portion, which is beneficial to improving the space utilization rate in the battery.

In one possible implementation, the pressure relief mechanism is provided at one end of the third wall farther away from the first box portion. In this way, on the third wall, the pressure relief mechanism is farther away from the first box portion relative to the electrode terminal, which is beneficial to reducing height of the insulating liquid in the second box portion and preventing the insulating liquid from leaking or splashing from the joint between the second box portion and the first box portion.

In one possible implementation, the battery further includes a battery management mechanism, where the battery management mechanism is provided on a surface of the first box portion farther away from the battery cell and is electrically connected to the battery. The traditional sealing of the battery management mechanism cannot meet the requirements of liquid sealing. With the battery management mechanism provided on the surface of the first box portion farther away from the battery cell, a distance between the insulating liquid and the battery management mechanism can be increased. This prevents the insulating liquid from affecting the performance of the battery management mechanism and reducing the reliability of the battery management mechanism. In addition, this also prevents the impact on the sealing of the battery management mechanism caused by the splashing of insulating liquid during the discharge of emissions from inside of the battery cell.

In one possible implementation, the first box portion includes a top wall and a side wall, and the battery management mechanism is provided on the side wall. The provision of the battery management mechanism on the side wall of the first box portion can save space at the top of the first box portion and improve space utilization.

In one possible implementation, the pressure relief mechanism is closer to the inside of the battery cell relative to a surface of the second wall farther away from the battery cell. This facilitates the release of pressure and high-temperature gas inside the battery cell.

In one possible implementation, the battery further includes a sealing gasket, where the sealing gasket is provided between the first box portion and the second box portion to seal a joint between the first box portion and the second box portion. This helps prevent external impurities such as dust and water from affecting the internal components of the battery.

In one possible implementation, an insulator is provided between the battery cell and the second box portion. This can further ensure insulation between the battery cell and the second box portion, which is beneficial to improving the reliability of the battery. In addition, a gap between the insulator and the second wall of the battery cell also facilitates storage of insulating liquid between the insulator and the second wall of the battery cell.

According to a second aspect, an electric device is provided, including the battery according to the first aspect or any possible implementation of the first aspect, where the battery is configured to supply power to the electric device.

In the embodiments of this application, the battery includes a first box portion and a second box portion, the battery cell and insulating liquid are accommodated in the accommodating space formed by the first box portion and the second box portion, the electrode terminal is closer to the first box portion relative to the pressure relief mechanism, the insulating liquid immerse the pressure relief mechanism, and when the insulating liquid is provided in the accommodating space, the first box portion is located above the second box portion. In this way, the pressure relief mechanism is actuated when an internal pressure or temperature of the battery cell reaches a threshold, to release the internal pressure or high-temperature gas. In this case, the insulating liquid can enter the battery cell through the pressure relief mechanism, cutting off the contact between combustible materials in the battery cell and air, preventing or mitigating internal ignition of the battery cell, and also reducing the temperature of the battery cell. In addition, the insulating liquid can exchange heat with the emissions discharged from the battery cell, reducing the temperature of the discharged emissions and preventing the thermal runaway from spreading to adj acent battery cells or the entire battery. Therefore, the technical solutions of the embodiments of this application can enhance the safety performance of the battery.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a vehicle according to an embodiment of this application;
FIG. 2 is a schematic diagram of a battery according to an embodiment of this application;
FIG. 3 is a schematic diagram of a battery cell according to an embodiment of this application;
FIG. 4 is a schematic diagram of a battery according to an embodiment of this application;
FIG. 5 is a schematic diagram of a battery according to an embodiment of this application;
FIG. 6 is a schematic diagram of a battery according to an embodiment of this application;
FIG. 7 is a schematic diagram of a first box portion according to an embodiment of this application; and
FIG. 8 is a schematic diagram of a first box portion according to an embodiment of this application.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the descriptions of this application, it should be noted that, unless otherwise specified, all technical and scientific terms used shall have the same meanings as commonly understood by those skilled in the art to which this application relates. The terms used are intended to merely describe the specific embodiments rather than to limit this application. The terms "include", "have", and any other variations thereof in the specification, claims and brief description of drawings of this application are intended to cover non-exclusive inclusions. "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The orientation terms appearing in the following description all are directions shown in the figures, and do not limit the specific structure of the application. In the description of this application, it should be noted that unless otherwise specified and defined explicitly, the terms "mounting", "interconnection", and "connection", should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery pack. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is coated on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (PP), polyethylene (PE), or the like. In addition, the electrode assembly may have a wound structure or a stacked structure. However, the embodiments of this application are not limited thereto.

To meet different power requirements, the battery may include a plurality of battery cells, and the plurality of battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery. The battery is then disposed in an electric device to provide electrical energy for the electric device.

For the development of battery technologies, various design factors need to be considered, for example, performance parameters such as energy density, cycle life, discharge capacity, charge and discharge rate, and safety. Among them, the safety performance of the battery is very important. During the use of the battery, a large amount of heat is generated. When the heat cannot be dissipated in a timely manner, the heat accumulates and adds up. This can lead to a thermal runaway, resulting in safety accidents such as smoking, ignition, and explosion. Therefore, it is very important to improve the safety performance of the battery.

In view of this, embodiments of the application provide a battery, where the battery includes a first box portion and a second box portion, the battery cell and insulating liquid are accommodated in the accommodating space formed by the first box portion and the second box portion, the electrode terminal is closer to the first box portion relative to the pressure relief mechanism, the insulating liquid immerse the pressure relief mechanism, and when the insulating liquid is provided in the accommodating space, the first box portion is located above the second box portion. In this way, the pressure relief mechanism is actuated when an internal pressure or temperature of the battery cell reaches a threshold, to release the internal pressure or high-temperature gas. In this case, the insulating liquid can enter the battery cell through the pressure relief mechanism, cutting off the contact between combustible materials in the battery cell and air, preventing or mitigating internal ignition of the battery cell, and also reducing the temperature of the battery cell. In addition, the insulating liquid can exchange heat with the emissions discharged from the battery cell, reducing the temperature of the discharged emissions and preventing the thermal runaway from spreading to adjacent battery cells or the entire battery. Therefore, the technical solutions of the embodiments of this application can enhance the safety performance of the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, electric vehicles are used as an example for description in the following embodiments.

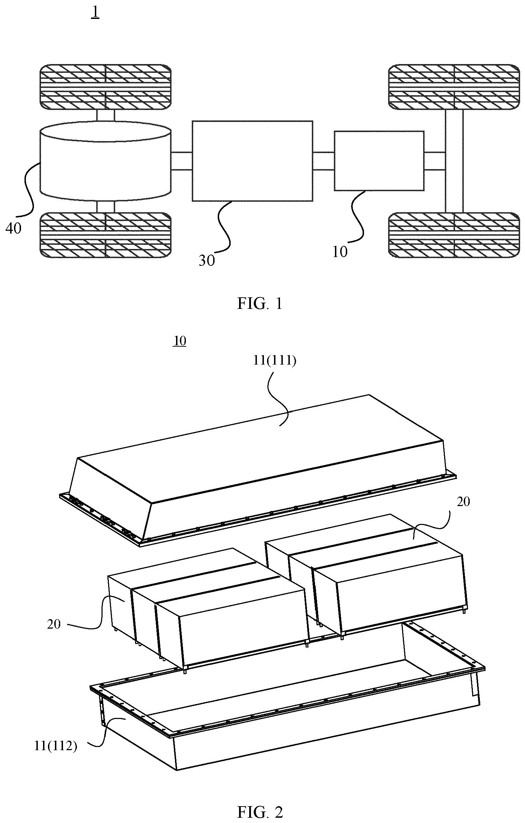

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include a plurality of battery cells. For example, FIG. 2 is a schematic structural diagram of a battery 10 according to an embodiment of this application. The battery 10 may include a plurality of battery cells 20. The battery 10 may further include a box 11. Inside of the box 11 is a hollow structure. The plurality of battery cells 20 are accommodated in the box 11. For example, the plurality of battery cells 20 are connected in parallel, series, or parallel-series, and then placed into the box 11.

Optionally, the battery 10 may further include other structures. Details are not described herein. For example, the battery 10 may further include a current collecting component, where the current collecting component is configured to implement an electrical connection between a plurality of battery cells 20, for example, a parallel connection, a series connection, or a series and parallel connection. Specifically, the current collecting component may implement the electrical connection among the battery cells 20 by connecting electrode terminals of the battery cells 20. Further, the current collecting component may be fixed to the electrode terminal of the battery cell 20 by welding. Electrical energy of the multiple battery cells 20 may be further led out through a conductive mechanism that passes through the box. Optionally, the conductive mechanism may also belong to the current collecting component.

Based on different power demands, battery cells 20 may be provided in any quantity. The plurality of battery cells 20 may be connected in series, parallel, or series-parallel to achieve greater capacity or power. Because each battery 10 may include a large number of battery cells 20, for ease of installation, the battery cells 20 may be provided in groups, and each group of battery cells 20 form a battery module. The number of battery cells 20 included in the battery module is not limited, and may be set according to requirements. A battery may include multiple battery modules. These battery modules may be connected in series, parallel, or series-parallel.

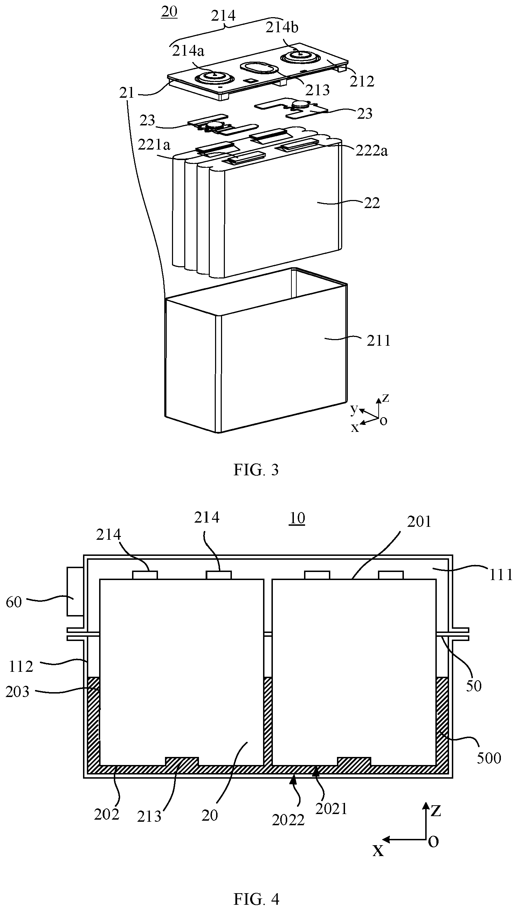

FIG. 3 is a schematic structural diagram of a battery cell 20 according to an embodiment of this application. The battery cell 20 includes one or more electrode assemblies 22, a housing body 211, and a cover plate 212. The housing body 211 and the cover plate 212 form a housing or a battery box 21. The walls of the housing body 211 and the cover plate 212 are all referred to as the walls of the battery cell 20. For a rectangular-type battery cell 20, the walls of the housing body 211 include a bottom wall and four side walls. The housing body 211 is determined depending on a shape of the one or more electrode assemblies 22 combined. For example, the housing body 211 may be a hollow cuboid, cube, or cylinder, and one face of the housing body 211 has an opening so that the one or more electrode assemblies 22 can be put into the housing body 211. For example, when the housing body 211 is a hollow cuboid or cube, one face of the housing body 211 is an opening face, which means that the face has no wall so that the inside and the outside of the housing body 211 are communicated. When the housing body 211 is a hollow cylinder, the end face of the housing body 211 is an opening face, which means that the end face has no wall so that the inside and the outside of the housing body 211 are communicated. The cover plate 212 covers the opening and is connected to the housing body 211 to form an enclosed cavity of the electrode assembly 22. The housing body 211 is filled with an electrolyte such as a liquid electrolyte.

The battery cell 20 may also include two electrode terminals 214 that may be disposed on the cover plate 212. The cover plate 212 is generally in a shape of a flat plate, and two electrode terminals 214 are fixed on a flat surface of the cover plate 212. The two electrode terminals 214 are a positive electrode terminal 214a and a negative electrode terminal 214b respectively. Each electrode terminal 214 is correspondingly provided with a connecting member 23, or referred to as a current collecting member 23 located between the cover plate 212 and the electrode assembly 22 for electrically connecting the electrode assembly 22 and the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab. The first tabs 221a of the one or more electrode assemblies 22 are connected to one electrode terminal through one connecting member 23, and the second tabs 222a of the one or more electrode assemblies 22 are connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, one or more electrode assemblies 22 may be provided depending on an actual need. As shown in FIG. 3, the battery cell 20 is provided with four independent electrode assemblies 22.

FIG. 4 is a schematic structural diagram of a battery according to an embodiment of this application. As shown in FIG. 4, the battery 10 includes a first box portion 111, a second box portion 112, a battery cell 20, and an insulating liquid 500. The first box portion 111 and the second box portion 112 fit together to define an accommodating space. The battery cell 20 is accommodated in the accommodating space. The battery cell 20 is provided with an electrode terminal 214 and a pressure relief mechanism 213. The electrode terminal 214 is closer to the first box portion 111 relative to the pressure relief mechanism 213. The pressure relief mechanism 213 is configured to be actuated when an internal pressure or temperature of the battery cell 20 reaches a threshold to release the internal pressure or high-temperature gas. The insulating liquid 500 is provided in the accommodating space and immerses the pressure relief mechanism 213. When the insulating liquid 500 is provided in the accommodating space, the first box portion 111 is located above the second box portion 112.

The first box portion 111 may be of a flat plate, or may be a rectangular or a cylindrical shape with an opening on one side.

The second box portion 112 may be a rectangular or cylindrical shape with an opening on one side, and the first box portion 111 and the second box portion 112 fit together to form an accommodating space.

The battery cell 20 is provided with an electrode terminal 214 and a pressure relief mechanism 213. The electrode terminal 214 may include a positive electrode terminal 214 and a negative electrode terminal 214. A current collecting component, for example, a busbar, may realize electrical connection between different battery cells 20 by connecting the electrode terminals 214.

The pressure relief mechanism 213 is configured to be actuated when an internal pressure or temperature of the battery cell 20 reaches a threshold to release the internal pressure or high-temperature gas. The pressure relief mechanism 213 may be various possible pressure relief structures. For example, the pressure relief mechanism 213 may be a temperature-sensitive pressure relief mechanism, where the temperature-sensitive pressure relief mechanism is configured to be melted when the internal temperature of the battery cell 20 provided with the pressure relief mechanism 213 reaches a threshold; and/or the pressure relief mechanism 213 may be a pressure-sensitive pressure relief mechanism, where the pressure-sensitive pressure relief mechanism is configured to be split when the internal pressure of the battery cell 20 provided with the pressure relief mechanism 213 reaches a threshold.

The pressure relief mechanism 213 is "actuated" means that the pressure relief mechanism 213 is put into action such that the internal pressure and high-temperature gas of the battery cell 20 are released. The action that the pressure relief mechanism 213 is put into may include but is not limited to, for example, cracking, tearing, or melting at least part of the pressure relief mechanism 213. After the pressure relief mechanism 213 is actuated, high-pressure and high-temperature substances inside the battery cell 20 are discharged from the pressure relief mechanism 213 as emissions.

The emissions from the battery cell 20 include but are not limited to: electrolyte, fragments of positive and negative electrode plates and separator that are dissolved or disrupted, and high-temperature and high-pressure gases and flames produced by reactions.

The insulating liquid 500 is provided in the accommodating space and immerses the pressure relief mechanism 213, and when the insulating liquid 500 is provided in the accommodating space, the first box portion 111 is located above the second box portion 112. As shown in FIG. 4, the insulating liquid 500 is provided in the accommodating space and immerses the pressure relief mechanism 213, and in direction z, the first box portion 111 is located above the second box portion 112. Thus, the pressure relief mechanism 213 is actuated and broken when the temperature or pressure in the battery cell 20 reaches a threshold. On one hand, the insulating liquid 500 can enter the battery cell 20 through the pressure relief mechanism 213, cutting off the contact path between combustible materials in the battery cell 20 and air, preventing or mitigating internal ignition of the battery cell 20, and reducing the temperature of the battery cell 20. In addition, the insulating liquid 500 can exchange heat with the emissions discharged from the battery cell 20, reducing the temperature of the emissions discharged from inside the battery cell 20 and preventing the thermal runaway from spreading to adjacent battery cells 20 or the entire battery 10.

In the embodiments of this application, the battery 10 includes a first box portion 111 and a second box portion 112, the battery cell 20 and insulating liquid 500 are accommodated in the accommodating space formed by the first box portion 111 and the second box portion 112, the electrode terminal 214 is closer to the first box portion 111 relative to the pressure relief mechanism 213, the insulating liquid 500 immerse the pressure relief mechanism 213, and when the insulating liquid 500 is provided in the accommodating space, the first box portion 111 is located above the second box portion 112. In this way, the pressure relief mechanism 213 is actuated when an internal pressure or high-temperature gas of the battery cell 20 reaches a threshold to release the internal pressure or high-temperature gas. In this case, the insulating liquid 500 can enter the battery cell 20 through the pressure relief mechanism 213, cutting off the contact between combustible materials in the battery cell 20 and air, preventing or mitigating internal ignition of the battery cell 20, and at the same time, reducing the temperature 20 of the battery cell. In addition, the insulating liquid 500 can exchange heat with the emissions discharged from the battery cell 20, reducing the temperature of the discharged emissions and preventing the thermal runaway from spreading to adjacent battery cells 20 or the entire battery 10. Therefore, the technical solutions of the embodiments of this application can enhance the safety performance of the battery.

Optionally, in an embodiment of this application, when the insulating liquid 500 is provided in the accommodating space, height of the insulating liquid 500 in the accommodating space in a direction of gravity is smaller than height of the second box portion 112 in the direction of gravity.

When the insulating liquid 500 is provided in the accommodating space, the direction of gravity may be direction z. Thus, when the insulating liquid 500 is provided in the accommodating space, height of the insulating liquid 500 in direction z is smaller than height of the second box portion 112 in direction z, preventing the insulating liquid 500 from leaking at the joint between the first box portion 111 and the second box portion 112.

Optionally, in an embodiment of this application, the electrode terminal 214 is provided on a first wall 201 of the battery cell 20, the pressure relief mechanism 213 is provided on a second wall 202 of the battery cell 20, and the first wall 201 and the second wall 202 are provided spaced apart and opposite each other in a first direction. When the insulating liquid 500 is provided in the accommodating space, the first direction is parallel to the direction of gravity.

When the insulating liquid 500 is provided in the accommodating space, the first direction may be direction z in FIG. 4. In direction z, the first wall 201 and the second wall 202 are spaced apart and opposite each other, and the first wall 201 is closer to the first box portion 111 relative to the second wall 201.

The electrode terminal 214 is provided on the first wall 201, and the pressure relief mechanism 213 is provided on the second wall 202. On one hand, emissions discharged from inside of the battery cell 20 experiencing a thermal runaway, for example, the discharged metal debris, will not electrically connect with the current collecting component connecting the electrode terminals 214, thus avoiding short circuits of some battery cells 20 and improving the safety performance of the battery 10; and on the other hand, during the use of the battery 10, the second wall 202 is usually positioned away from the user, disposing the pressure relief mechanism 213 on the second wall 202 can reduce harm to the user.

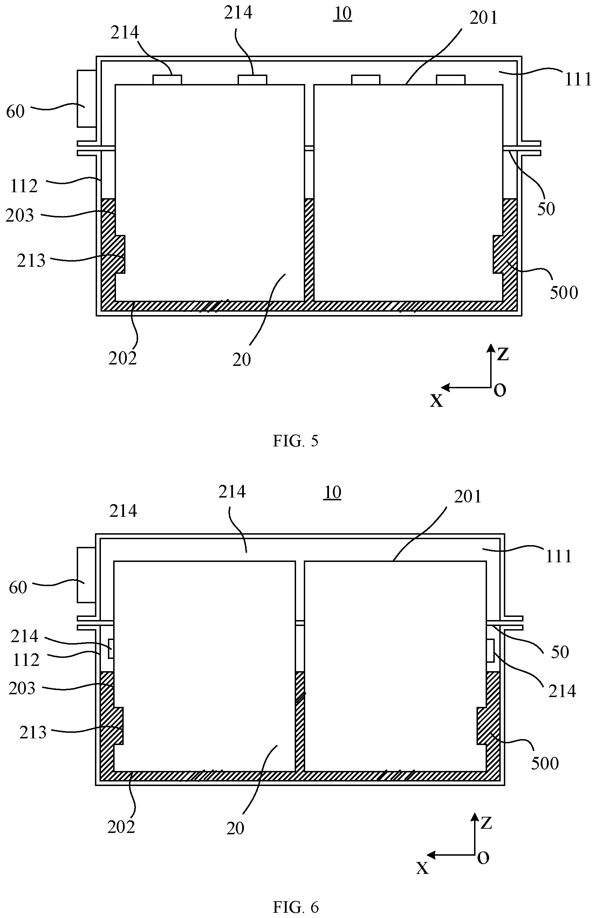

FIG. 5 is a schematic structural diagram of a battery according to an embodiment of this application. Optionally, in an embodiment of the application, as shown in FIG. 5, the electrode terminal 214 is provided on a first wall 201 of the battery cell 20, the pressure relief mechanism 213 is provided on a third wall 203 of the battery cell 20, the first wall 201 is connected to the third wall 203, the third wall 203 is parallel to a first direction, and the first wall 201 is perpendicular to the first direction. When the insulating liquid 500 is provided in the accommodating space, the first direction is parallel to the direction of gravity.

When the insulating liquid 500 is provided in the accommodating space, the first direction may be direction z in FIG. 5, the third wall 203 is parallel to direction z, and the first wall 201 is perpendicular to direction z. The pressure relief mechanism 213 being disposed on the third wall 203 can facilitate the production of the battery cell 20.

FIG. 6 is a schematic structural diagram of a battery according to an embodiment of this application. Optionally, in an embodiment of this application, as shown in FIG. 6, the pressure relief mechanism 213 and the electrode terminal 214 are provided on a third wall 203 of the battery cell 20, and the third wall 203 is parallel to a first direction. When the insulating liquid 500 is provided in the accommodating space, the first direction is parallel to the direction of gravity.

When the insulating liquid 500 is provided in the accommodating space, the first direction may be direction z in FIG. 6, and the third wall 203 is parallel to direction z. When the pressure relief mechanism 213 and the electrode terminal 214 are both provided on the third wall 203, the first wall 201 of the battery cell 20 faces the first box portion 111 and is not provided with the first terminal 213. This way, there is no need to reserve space for the electrode terminal 214 between the first wall 201 and the first box portion 111, which is beneficial to improving the space utilization rate in the battery 10.

Optionally, in an embodiment of this application, as shown in FIGs. 5 and 6, the pressure relief mechanism 213 is provided at one end of the third wall 203 farther away from the first box portion 111. This is beneficial to reducing height of the insulating liquid 500 in the second box portion 112, preventing the insulating liquid 500 from leaking or splashing from the joint between the second box portion 112 and the first box portion 111 when the pressure relief mechanism 213 breaks.

Optionally, in an embodiment of this application, the battery 10 further includes a battery management mechanism 60, where the battery management mechanism 60 is provided on a surface of the first box portion 111 farther away from the battery cell 20 and is electrically connected to the battery 10.

The battery management mechanism 60 may be a battery management system, including a control module, a display module, a wireless communication module, an electric device, an information collection module, and the like. It can be used to monitor and manage the state of charge, power boundary, health state, fault state, and the like of the battery 10. The battery management mechanism 60 usually needs to be sealed and then provided on the battery 10.

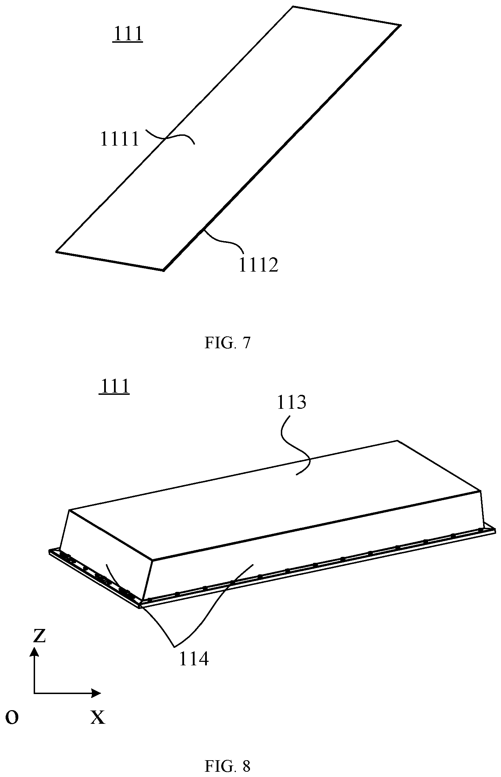

FIG. 7 is a schematic structural diagram of the first box portion 111 according to an embodiment of this application. As shown in FIG. 7, the first box portion 111 has a flat-plate structure, and may include a first surface 1111 and a second surface 1112 which are provided opposite each other along thickness direction of the first box portion 111. When the first box portion 111 and the second box portion 112 fit together, the second surface 1112 is farther from the battery cell 20 relative to the first surface 1111. In this case, the battery management mechanism 60 is provided on the second surface 1112 and is electrically connected to the battery 10.

FIG. 8 is a schematic structural diagram of the first box portion 111 according to an embodiment of this application. As shown in FIG. 8, the first box portion 111 has a rectangular structure with an opening on one side. The first box portion 111 includes a top wall 113 and a side wall 114. One end of the side wall 114 is connected to the top wall 113, and an opening is formed at another end. After the first box portion 111 and the second box portion 112 fit together, the battery management mechanism 60 may be provided on the top wall 113 or a surface of the side wall 114 farther away from the battery cell 20.

The traditional sealing of the battery management mechanism 60 cannot meet the requirements of liquid sealing. With the battery management mechanism 60 provided on the surface of the first box portion 111 farther away from the battery cell 20, a distance between the insulating liquid 500 and the battery management mechanism 60 can be increased. This prevents the insulating liquid 500 from affecting the performance of the battery management mechanism 60 and reducing the reliability of the battery management mechanism 60. In addition, this also prevents the impact on the sealing of the battery management mechanism 60 caused by the splashing of insulating liquid 500 during the discharge of emissions from inside of the battery cell 20.

Alternatively, the battery management mechanism 60 may also be provided on a side wall of the second box portion 112, and an insulating pad is provided between the battery management mechanism 60 and the side wall of the second box portion 112 to isolate the side wall of the second box portion 112 from the battery management mechanism 60.

Optionally, in an embodiment of this application, referring to FIG. 8, the first box portion 111 includes a top wall 113 and a side wall 114, and the battery management mechanism 60 is provided on the side wall 114. With the battery management mechanism 60 provided on the side wall 114 of the first box portion 111, the space at the top of the first box portion 111 can be saved and the utilization rate of the space can be improved.

Optionally, in an embodiment of this application, the pressure relief mechanism 213 is closer to the inside of the battery cell 20 relative to a surface of the second wall 202 farther away from the battery cell 20.

The second wall 202 may include an inner surface 2021 and an outer surface 2022. The inner surface 2021 is closer to the battery cell 20 relative to the outer surface 2022. In other words, the inner surface 2021 may be in contact with the electrolyte inside the battery cell 20, and the outer surface 2022 may be in contact with the insulating liquid 500 inside the battery 10.

The pressure relief mechanism 213 is closer to the inside of the battery cell 20 relative to the surface of the second wall 202 farther away from the battery cell 20. In other words, the pressure relief mechanism 213 is closer to the inside of the battery cell 20 relative to the outer surface 2022 of the second wall 202, that is, the pressure relief mechanism protrudes toward the first box portion 111 in direction z. This facilitates the release of pressure and high-temperature gas inside the battery cell 20.

Optionally, in an embodiment of the application, the battery 10 further includes a sealing gasket 50, where the sealing gasket 50 is provided between the first box portion 111 and the second box portion 112 to seal a joint between the first box portion 111 and the second box portion 112.

The sealing gasket 50 may have an annular structure and be fitter around between the first box portion 111 and the second box portion 112 to realize sealing between the first box portion 111 and the second box portion 112. In other embodiments, the first box portion 111 and the second box portion 112 may alternatively be sealed by sealant.

Sealing the first box portion 111 and the second box portion 112 can prevent impurities such as dust and water outside the battery 10 from affecting components inside the battery 10.

Optionally, in an embodiment of this application, an insulator is provided between the battery cell 20 and the second box portion 112.

The insulator may be located between the second box portion 112 and the battery cell 20, and the insulator is bonded with the second box portion 112. The battery cell 20 is placed on the insulator. The provision of the insulator further ensures insulation between the second box portion 112 and the battery cell 20, which is beneficial to improving the overall reliability of the battery 10. In addition, this arrangement can also ensure the presence of the insulating liquid 500 between the battery cell 20 and the insulator.

Optionally, the second wall 202 of the battery cell 20 is placed on the insulator, that is, the second wall 202 is in contact with the insulator, and the second wall 202 may be the wall of the battery cell 20 with the largest surface area.

Optionally, a plurality of battery cells 20 can form a battery module, and the battery module can be fixed to the second box portion 112 through structures such as side plates, end plates, or connecting strips.

It should be understood that relevant parts in various embodiments of this application can be mutually referenced. For brevity, details are not repeated herein.

An embodiment of this application further provides an electric device, where the electric device may include the battery in the foregoing embodiments, and the battery is configured for providing electric energy.

## Claims

1. A battery, **characterized by** comprising:
a first box portion (111);
a second box portion (112), wherein the first box portion (111) and the second box portion (112) fit together to define an accommodating space;
a battery cell (20), wherein the battery cell (20) is accommodated in the accommodating space, the battery cell (20) is provided with an electrode terminal (214) and a pressure relief mechanism (213), the electrode terminal (214) is closer to the first box portion (111) relative to the pressure relief mechanism (213), and the pressure relief mechanism (213) is configured to be actuated when an internal pressure or temperature of the battery cell (20) reaches a threshold, to release the internal pressure or high-temperature gas; and
an insulating liquid (500), the insulating liquid (500) being provided in the accommodating space and immersing the pressure relief mechanism (213), wherein when the insulating liquid (500) is provided in the accommodating space, the first box portion (111) is located above the second box portion (112).

2. The battery according to claim 1, **characterized in that** when the insulating liquid (500) is provided in the accommodating space, height of the insulating liquid (500) in the accommodating space in a direction of gravity is smaller than height of the second box portion (112) in the direction of gravity.

3. The battery according to claim 1 or 2, **characterized in that** the electrode terminal (214) is provided on a first wall (201) of the battery cell (20), the pressure relief mechanism (213) is provided on a second wall (202) of the battery cell (20), and the first wall (201) and the second wall (202) are provided spaced apart and opposite each other in a first direction, wherein when the insulating liquid (500) is provided in the accommodating space, the first direction is parallel to the direction of gravity.

4. The battery according to claim 1 or 2, **characterized in that** the electrode terminal (214) is provided on a first wall (201) of the battery cell (20), the pressure relief mechanism (213) is provided on a third wall (203) of the battery cell (20), the first wall (201) is connected to the third wall (203), the third wall (203) is parallel to a first direction, and the first wall (201) is perpendicular to the first direction, wherein when the insulating liquid (500) is provided in the accommodating space, the first direction is parallel to the direction of gravity.

5. The battery according to claim 1 or 2, **characterized in that** the pressure relief mechanism (213) and the electrode terminal (214) are provided on a third wall (203) of the battery cell (20), and the third wall (203) is parallel to a first direction, wherein when the insulating liquid (500) is provided in the accommodating space, the first direction is parallel to the direction of gravity.

6. The battery according to claim 4 or 5, **characterized in that** the pressure relief mechanism (213) is provided at an end of the third wall (203) farther away from the first box portion (111).

7. The battery according to any one of claims 1 to 6, **characterized in that** the battery (10) further comprises:
a battery management mechanism (60), wherein the battery management mechanism (60) is provided on a surface of the first box portion (111) farther away from the battery cell (20) and is electrically connected to the battery (10).

8. The battery according to claim 7, **characterized in that** the first box portion (111) comprises a top wall and a side wall, and the battery management mechanism (60) is provided on the side wall.

9. The battery according to claim 3, **characterized in that** the pressure relief mechanism (213) is closer to the inside of the battery cell (20) relative to a surface of the second wall (202) farther away from the battery cell (20).

10. The battery according to any one of claims 1 to 9, **characterized in that** the battery further comprises:
a sealing gasket (50), wherein the sealing gasket (50) is provided between the first box portion (111) and the second box portion (112) to seal a joint between the first box portion (111) and the second box portion (112).

11. The battery according to any one of claims 1 to 10, **characterized in that** an insulator is provided between the battery cell and the second box portion (112).

12. An electric device, **characterized by** comprising the battery according to any one of claims 1 to 11, wherein the battery is configured to supply power to the electric device.
